# FASCICULE DE BREVET EUROPEEN

(11) **EP 3 209 539 B1**
(45) Date de publication et mention de la délivrance du brevet: **09.01.2019**
(21) Numéro de dépôt: 15804164.0
(22) Date de dépôt: 16.10.2015
(51) Int. Cl.: B62D 25/06

(54) **GAMME D'AU MOINS DEUX TYPES DE VEHICULE AUTOMOBILE COMPRENANT UN PAVILLON EN TOLE OU UN PAVILLON EN VERRE**
AUSWAHL VON MINDESTENS ZWEI ARTEN VON KRAFTFAHRZEUGEN MIT EINEM BLECHDACH ODER EINEM GLASDACH
RANGE OF AT LEAST TWO TYPES OF MOTOR VEHICLE COMPRISING A SHEET METAL ROOF OR A GLASS ROOF

(30) Priorité: 24.10.2014 FR 1460247
(43) Date de publication de la demande: 30.08.2017
(73) Titulaire: Renault s.a.s, 92100 Boulogne-Billancourt (FR)
(72) Inventeur: DEGAUGUE, Remi, 27160 Breteuil sur Iton (FR)
(86) Numéro de dépôt international: PCT/FR2015/052788
(87) Numéro de publication internationale: WO 2016/075379

(56) Documents cités:
- DE-A1-102012 015 162
- JP-A- 2012 240 527

## Description

La présente invention concerne une gamme d'au moins deux types de véhicule automobile dont un premier type de véhicule comprend un pavillon en tôle et un second type de véhicule comporte un pavillon en verre.

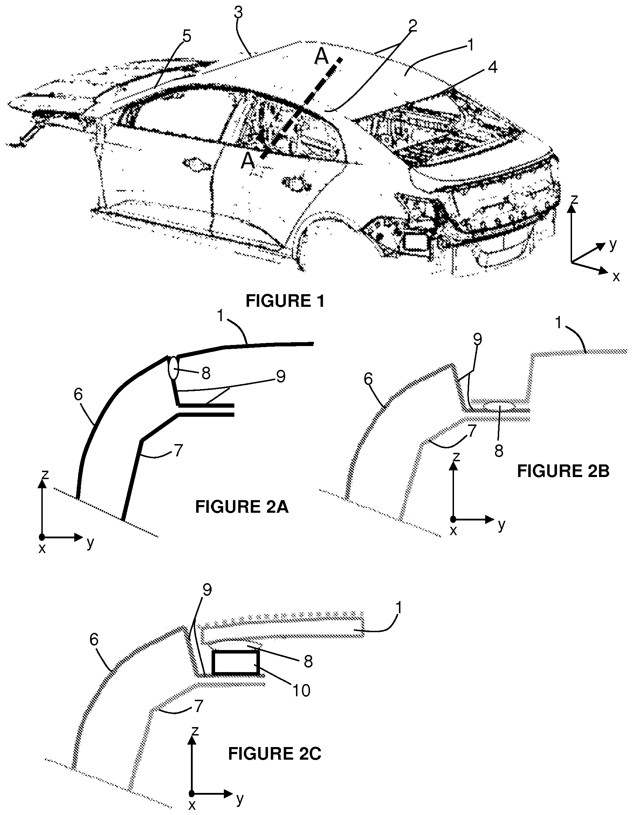

Traditionnellement, une structure de caisse de véhicule automobile est constituée de pièces assemblées les unes par rapport aux autres. En référence à la figure 1, cette structure de caisse comprend généralement au moins une traverse avant 3 de pavillon 1 qui s'étend transversalement et qui assure le maintien d'un pare brise et du pavillon 1, une traverse arrière 4 de pavillon 1 qui s'étend sensiblement parallèlement à la traverse avant 3 et dans la zone arrière du pavillon 1, deux brancards 2 de pavillon 1 longitudinaux qui relient une extrémité transversale de la traverse avant 3 à l'extrémité correspondante de la traverse arrière 3, et un pavillon 1 qui repose au moins sur les traverses avant 3 et arrière 4 et sur les brancards 2.

Les pavillons 1 de véhicule sont généralement liés à la structure de caisse en de multiples points sur la périphérie du pavillon 1 et en particulier au niveau des deux brancards 2. Ces brancards 2 sont formés par des éléments superposés de manière sensiblement parallèle tel qu'un renfort de brancard 7 fixé à un côté de caisse 6 solidaire de la structure de caisse du véhicule, respectivement disposés depuis l'extérieur du véhicule vers l'intérieur du véhicule.

Généralement, le pavillon 1 est assemblé à la structure de caisse selon une configuration particulière prévoyant que la face supérieure visible du pavillon est située dans le prolongement de la face supérieure visible du côté de caisse.

Pour ce faire, les pavillons 2 dans l'état de l'art illustré aux figures 2A et 2B présentent une partie périphérique dont la forme est définie pour assurer une liaison avec la structure de caisse notamment avec des zones de fixation 9 situées au niveau du côté de caisse à partir d'éléments de liaison 8 afin de permettre un agencement du pavillon selon cette configuration. Cependant, une telle mise en forme de la partie périphérique du pavillon est généralement effectuée lorsque le pavillon est réalisé en un matériau métallique comme de la tôle.

En effet sur la figure 2C lorsque le pavillon 1 est en verre, la structure de caisse doit alors être modifiée par exemple par l'ajout d'une pièce intermédiaire 10, autrement appelée allonge, qui doit être est positionnée au niveau des brancards 2 et notamment du coté de caisse 6 pour pouvoir assurer la liaison de ce pavillon avec le côté de caisse 6 de la structure de caisse à partir de l'élément de liaison 8.

Le document DE102012015162-A1 décrit une gamme d'au moins deux types de véhicule automobile comprenant un pavillon en tôle ou en plastique renforcé de fibre, et une structure de caisse selon le préambule de la revendication 1.

Dès lors, un des inconvénients majeur de ces structures de caisse est lié au fait qu'il est systématiquement nécessaire de les modifier afin qu'il soit adaptées aux caractéristiques des pavillons avec lesquels ils doivent être assemblés. L'adaptation systématique des structures de caisse aux caractéristiques des pavillons est contraignante voire pénalisante en particulier dans le cadre de la fabrication de différents modèles de véhicule à partir d'une même structure de caisse. De plus dans ce contexte, cette adaptation ajoute de la complexité dans les procédures d'assemblage de pavillons sur les structures de caisse tout en augmentant le coût de fabrication de ces véhicules.

La présente invention a pour objectif d'améliorer la compatibilité des structures de caisse avec une large gamme de pavillons.

Dans ce dessein, l'invention concerne une gamme d'au moins deux types de véhicule automobile, dont un premier type de véhicule comprend un pavillon en tôle et un second type comprend un pavillon en verre, ces véhicules comprenant chacun une structure de caisse pourvue de brancards latéraux constitués d'une paroi extérieure tournée vers l'extérieur du véhicule et d'une paroi intérieure formant une doublure intérieure, tournée vers l'intérieur du véhicule, les brancards latéraux étant identiques pour les deux types de véhicules automobile, et formant sélectivement une deuxième zone d'appui basse pour un bord latéral longitudinal du pavillon en tôle du véhicule du premier type ou une première zone d'appui haute pour une face inférieure du pavillon en verre du véhicule du second type.

Dans d'autres modes de réalisation :
- la deuxième zone d'appui basse est conformée sur un bord longitudinal d'une face supérieure de la paroi extérieure de chaque brancard latéral tandis que la première zone d'appui haute est conformée sur un bord longitudinal d'une face supérieure de la paroi intérieure formant la doublure intérieure ;
- les parois extérieure et intérieure définissent une gouttière comprenant un fond formé par la deuxième zone d'appui basse et un bord relevé vers l'intérieur du véhicule constitué par une deuxième partie de la paroi extérieure comprenant la première zone d'appui haute ;
- les première et deuxième zones d'appui sont comprises dans des premier et deuxième plans sensiblement horizontaux ;
- la première zone d'appui haute est située à une deuxième hauteur qui est sensiblement supérieure à une première hauteur de la deuxième zone d'appui basse ;
- la première zone d'appui haute et la deuxième zone d'appui basse sont agencées transversalement dans chaque brancard latéral respectivement à des troisième et deuxième positions ;
- la troisième position de la première zone d'appui haute est localisée à une deuxième distance d'une première position, la deuxième distance étant sensiblement supérieure à une première distance définie entre la deuxième position de la deuxième zone d'appui basse et la première position ;
- la première zone d'appui haute est reliée mécaniquement à la face inférieure du pavillon en verre à partir d'un élément de liaison comme notamment de la colle ;
- la deuxième zone d'appui basse est reliée mécaniquement au bord latéral longitudinal du pavillon en tôle à partir d'un élément de liaison comme notamment une soudure par point, et
- chaque brancard latéral forme une troisième zone d'appui pour un bord latéral longitudinal du pavillon en tôle.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figures 1 représente un véhicule comprenant une structure de de caisse de l'état de l'art ;
- les figures 2A, 2B, 2C sont des représentations schématiques d'une vue d'une section transversale selon A-A de la vue de la figure 1 d'un brancard de la structure de caisse assemblé à un pavillon dans l'état de l'art, et
- la figure 3 représente une section transversale d'un brancard d'une structure de caisse assemblé à un pavillon selon le mode de réalisation de l'invention.

La description est faite en référence à un repère orthonormé (X, Y, Z) associé classiquement à un véhicule automobile, dans lequel X est la direction longitudinale avant-arrière du véhicule dirigée vers l'arrière, Y est la direction transversale dirigée vers la droite, et Z est la direction verticale dirigée vers le haut.

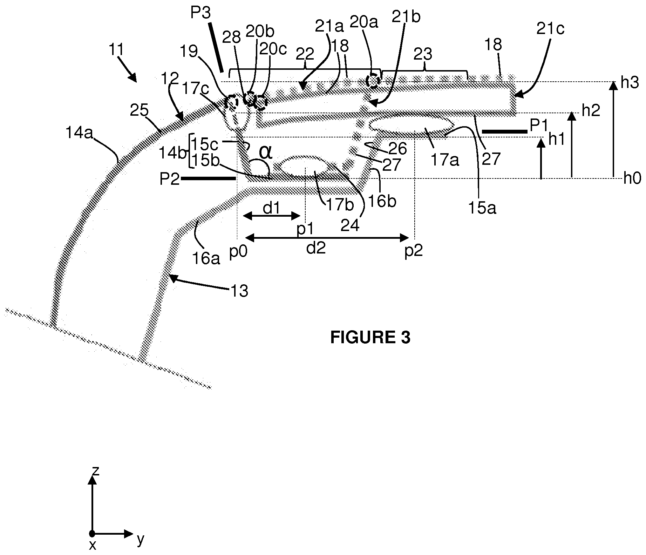

Dans ce mode de réalisation de l'invention, une gamme d'au moins deux types de véhicule automobile comporte :
- un premier type de véhicule comprenant une structure de caisse qui est apte à être assemblée avec un pavillon 21a, 21b métallique par exemple en tôle, visible en pointillés sur la figure 3, et
- un deuxième type de véhicule dont la structure de caisse est également apte à être assemblée à un pavillon 21c en verre visible sur cette même figure 3.

Pour chaque véhicule de cette gamme, la structure de caisse comprend des traverses avant et arrière de pavillon (non représentée) et au moins un brancard latéral 11, de préférence deux brancards latéraux 11. On notera que les brancards latéraux 11 sont identiques pour les véhicules automobiles de la gamme.

On entend par :
- « brancard » 11 une pièce de structure destinée à soutenir au moins une partie latérale du pavillon 21a, 21b, 21c et s'étendant essentiellement dans la direction longitudinale du véhicule, et
- « traverse » une pièce de structure destinée à soutenir au moins une partie du pavillon 21a, 21b, 21c et s'étendant essentiellement dans la direction transversale du véhicule, en joignant deux brancards situés de part et d'autre du pavillon.

Plus précisément, la traverse avant est orientée transversalement au véhicule, dans une partie avant du pavillon 21a, 21b, 21c. Cette traverse avant est située entre des montants de baie qui encadrent et soutiennent un pare brise, et les brancards latéraux 11 de pavillon 21a, 21b, 21c qui s'étendent longitudinalement vers l'arrière du véhicule et qui supportent le pavillon 21a, 21b, 21c.

Les brancards latéraux 11 de pavillon 21a, 21b, 21c sont reliés à leur extrémité opposée par les traverses avant et arrière, de sorte que l'ensemble formé par la traverse avant, par les brancards latéraux 11 de pavillon 21a, 21b, 21c et par la traverse arrière, définit une ouverture qui a sensiblement la forme d'un parallélogramme.
Sur la figure 3, chaque brancard latéral 11 est formé par une paroi extérieure 12 à la structure de caisse également appelé côté de caisse et tournée vers l'extérieur du véhicule, et par une paroi intérieure 13 autrement nommée renfort de brancard, tournée vers l'intérieur du véhicule et formant une doublure intérieure ou encore un renfort intérieur. Cette paroi extérieure 12 est liée mécaniquement à la paroi intérieure 13 par exemple par soudage.

Dans ce mode de réalisation, lorsque le pavillon 21a, 21b, 21c est assemblé à la structure de caisse, il est supporté et fixé sur l'ensemble formé par les traverses avant et arrière, et les brancards latéraux 11 de pavillon selon une configuration particulière. Cette configuration particulière consiste en ce que le pavillon 21a, 21b, 21c est assemblé sur cet ensemble de sorte qu'une face supérieure 18 visible de ce pavillon 21a, 21b, 21c est agencée dans le prolongement des parties de la carrosserie du véhicule qui sont visibles de l'environnement extérieur de ce dernier et qui sont situées au niveau du pourtour d'une partie périphérique 22 du pavillon 21a, 21b, 21c. On entend par face supérieure 18 visible du pavillon 21a, 21b, 21c, la portion la plus importante de la face supérieure 18 de ce dernier qui est sensiblement comprise dans un même plan. Ainsi un rebord 20a, 20b, 20c formé au niveau de cette face supérieure 18 visible du pavillon et s'étendant longitudinalement est située à la même hauteur qu'un rebord 19 de la paroi extérieure 12 avec lequel il est en regard. Autrement dit, le rebord 19 de la paroi extérieure 12 et le rebord 20a, 20b, 20c formé au niveau de la face supérieure 18 visible du pavillon 21a, 21b, 21c sont susceptibles d'être compris dans un même plan.

En particulier, la face supérieure 18 visible du pavillon 21a, 21b, 21c est agencée dans l'alignement et/ou le prolongement d'une première partie 14a d'une face supérieure 25 de la paroi extérieure 12 de la structure de caisse qui sera définie par la suite et qui est visible sur la figure 3. Le pavillon 21b, 21c comprend alors une face inférieure 27 qui est en partie au contact des brancards latéraux 11 et la face supérieure 18 qui est orientée vers l'environnement extérieur du véhicule.

Dans chaque brancard latéral 11, la paroi intérieure 13 est de préférence réalisée en un matériau métallique et comprend deux parties. Une première partie 16a au niveau de tout ou partie de laquelle la paroi intérieure 13 est reliée à la paroi extérieure 12 de la structure de caisse et une deuxième partie 16b qui a une forme sensiblement d'un L inversé qui vient en prolongement de la première partie 16a et qui comprend une première zone d'appui haute 15a sensiblement plane. Cette première zone d'appui haute 15a est conformée sur un bord longitudinal d'une face supérieure 26 de la paroi intérieure 13 formant la doublure intérieure.

Cette deuxième partie 16b est susceptible de traverser l'ouverture comprise dans la structure de caisse qui est définie par l'ensemble formée par les traverses avant et arrière, et les brancards latéraux 11 de pavillon. Cette traversé de l'ouverture par la deuxième partie 16b s'effectue vers le haut selon la direction Z.

La première zone d'appui haute 15a est comprise dans un plan sensiblement horizontal P1. Cette première zone d'appui haute 15a est apte à coopérer avec une partie 23 de la face inférieure 27 du pavillon 21c en verre s'étendant longitudinalement selon la direction X et formant une zone de fixation du pavillon 21c agencée en regard de cette première zone d'appui haute 15a lorsque le pavillon 21c est assemblé avec la structure de caisse. La zone de fixation du pavillon 21c est comprise dans un plan parallèle au premier plan P1. On notera que cette zone de fixation du pavillon 21c est de préférence située dans la partie 23 de la face inférieure 27 du pavillon 21c en verre qui est localisée à proximité de la partie périphérique 22 de ce dernier.
La paroi intérieure 13 et en particulier sa deuxième partie 16b permet à la fois de positionner la face supérieure 18 du pavillon 21c en verre selon la configuration particulière et de réaliser une liaison mécanique de ce pavillon 21c au brancard latéral 11 et donc à la structure de caisse. La paroi intérieure 13 et plus précisément la première zone d'appui haute 15a est particulièrement adaptée à être reliée mécaniquement à la face inférieure 27 du pavillon en verre 21c à partir notamment d'un élément de liaison 17a comme de la colle. Dans des variantes, d'autres types de pavillons notamment métalliques peuvent également être assemblés à la structure de caisse en étant reliés à cette dernière à partir de la première zone d'appui haute 15a de la paroi intérieure 13, par un élément de liaison 17a adapté.

La paroi extérieure 12 est de préférence réalisée en un matériau métallique et comprend la face supérieure 25 comportant deux parties 14a, 14b. La première partie 14a de la face supérieure 25 qui est visible de l'environnement extérieure du véhicule et une deuxième partie 14b de cette face 25 qui n'est généralement pas visible ou encore que partiellement de cette environnement extérieure du fait qu'elle soit couverte en tout ou partie par le pavillon 21a, 21b et en particulier par la partie périphérique 22 du pavillon 21a, 21b lorsque ce dernier est assemblé à la structure de caisse.

La deuxième partie 14b de la face supérieure 25 est formée par deux zones d'appui 15b, 15c : une deuxième zone d'appui basse 15b et une troisième zone d'appui 15c. Ces deux zones d'appui 15b, 15c qui sont sensiblement planes, sont reliées entre elles et forment un angle a. Cet angle α qui peut être obtus est par exemple compris entre 90° et 120°, de préférence 95°. En particulier, la deuxième zone d'appui basse 15b est conformée sur un bord longitudinal de la face supérieure 25 de la paroi extérieure 12 de chaque brancard latéral 11, plus précisément sur la deuxième partie 14b.

La deuxième zone d'appui basse 15b est comprise dans un deuxième plan P2 sensiblement horizontal qui est parallèle au plan P1. Cette deuxième zone d'appui basse 15b est apte à coopérer avec un bord 24 latéral de la partie périphérique 22 du pavillon 21b s'étendant longitudinalement selon la direction X et formant une zone de fixation du pavillon 21b agencée en regard de la deuxième zone d'appui basse 15b lorsque le pavillon 21b est assemblé avec la structure de caisse. Cette zone de fixation du pavillon 21b est comprise dans un plan parallèle au deuxième plan P2. On notera que ce bord 24 latéral longitudinal est également appelé feuillure.

Dans ce mode de réalisation, le bord 24 latéral longitudinal de la partie périphérique 22 de ce pavillon 21b est apte à coopérer avec la deuxième zone d'appui basse 15b pour permettre à la fois de positionner la face supérieure 18 du pavillon 21b selon la configuration particulière et de réaliser une liaison mécanique de ce pavillon 21b avec chaque brancard latéral 11 et donc avec la structure de caisse. Pour ce faire, la partie périphérique 22 de ce pavillon 21b a par exemple une forme de L. La paroi extérieure 12 de chaque brancard latéral 11 et plus précisément la deuxième zone d'appui basse 15b est particulièrement adaptée à être reliée mécaniquement au bord 24 latéral longitudinal du pavillon en tôle 21b à partir notamment d'un élément de liaison 17b comme une soudure par point. Dans des variantes, d'autres types de pavillons notamment en verre ou en métal comprenant une partie ajourée en verre peuvent également être assemblés à la structure de caisse en étant reliés à cette dernière à partir de la deuxième zone d'appui basse 15b de la paroi extérieure 12 de chaque brancard latéral 11, par un élément de liaison 17b adapté.
La troisième zone d'appui 15c est comprise dans un troisième plan P3 formant avec le deuxième plan P2 l'angle a. Cette troisième zone d'appui 15c est apte à coopérer avec un bord 28 latéral de la partie périphérique 22 du pavillon 21a s'étendant longitudinalement selon la direction X et formant une zone de fixation du pavillon 21a agencée en regard de la troisième zone d'appui 15c lorsque le pavillon 21a est assemblé avec la structure de caisse. La zone de fixation du pavillon 21a est comprise dans un plan parallèle au troisième plan P3. Dans ce mode de réalisation, le bord 28 latéral longitudinal de la partie périphérique 22 de ce pavillon 21a est apte à coopérer avec la troisième zone d'appui 15c pour permettre à la fois de positionner la face supérieure 18 du pavillon 21a selon la configuration particulière et de réaliser une liaison mécanique de ce pavillon 21a avec chaque brancard latéral 11 et donc avec la structure de caisse.

La paroi extérieure 12 de chaque brancard latéral 11 brancard latéral et plus précisément la troisième zone d'appui 15c est particulièrement adaptée à être reliée mécaniquement au rebord latéral 20b de la partie périphérique 22 du pavillon en tôle 21a à partir notamment d'un élément de liaison 17c comme une soudure au laser. Dans des variantes, d'autres types de pavillons notamment en verre ou en métal comprenant une partie ajourée en verre peuvent également être assemblés à la structure de caisse en étant reliés à cette dernière à partir de la troisième zone d'appui 15c de la paroi extérieure 12, par un élément de liaison 17c adapté.

Ainsi que nous l'avons vu, les première, deuxième et troisième zones d'appui 15a, 15b, 15c sont aptes à la fois à supporter le pavillon 21a, 21b, 21c et à assurer sa fixation sur la structure de caisse. Plus précisément, les brancards latéraux 11 forment sélectivement :
- la première zone d'appui haute 15a pour la face inférieure 27 du pavillon 21c en verre du véhicule du second type ;
- la deuxième zone d'appui basse 15b pour le bord 24 latéral longitudinal du pavillon en tôle 21b du véhicule du premier type, ou
- la troisième zone de fixation 15c pour le bord 28 latéral longitudinal du pavillon en tôle 21a du véhicule du premier type.

On notera que dans ce mode de réalisation, les parois extérieure et intérieure 12, 13 de chaque brancard latéral 11 forment une gouttière comprenant un fond défini par la deuxième zone d'appui basse 15b et un bord relevé vers l'intérieur du véhicule constitué par la deuxième partie 16b comprenant la première zone d'appui haute 15a et un bord relevé vers l'extérieur du véhicule constitué par la troisième zone de fixation 15c.

Ces première, deuxième et troisième zones d'appui 15a, 15b, 15c sont agencées au niveau de chaque brancard latéral 11 à des première, deuxième et troisième hauteurs h0, h1, h2 différentes. Plus précisément, la première hauteur h0 est relative à la zone de fixation 15b la plus basse de chaque brancard latéral 11 en référence la quatrième hauteur h3 qui correspond à la hauteur à laquelle est située la face supérieure 18 du pavillon 21a, 21b, 21c lorsque ce dernier est assemblé à la structure de caisse selon la configuration particulière. Cette première hauteur h0 est relative à la deuxième zone d'appui basse 15b. La première zone d'appui haute 15a est quant à elle située à la deuxième hauteur h1 qui est sensiblement supérieure à la première hauteur h0. Cette deuxième hauteur h1 est définie par rapport à la première hauteur h0, et est comprise entre environ 5 et 15 mm, de préférence 10 mm.

La troisième hauteur h2 relative à la troisième zone d'appui 15c est également définie par rapport à la première hauteur h0 et est comprise entre environ 10 et 25 mm, et est de préférence de 18 mm. On notera que la troisième hauteur h2 est de préférence sensiblement supérieure aux première et deuxième hauteurs h1 et h0 des première et deuxième zones d'appui 15a, 15b. Cependant dans une alternative, la troisième hauteur h2 peut être comprise entre les premier et deuxième hauteurs h0 et h1 selon que la forme de la partie périphérique 22 du pavillon 21a définisse une zone de fixation apte à coopérer avec la troisième zone d'appui 15c à cette hauteur h2.

Les première, deuxième et troisième zones d'appui 15a, 15b, 15c sont agencées transversalement selon une direction Y au niveau de chaque brancard latéral 11 de la structure de caisse et à des première, deuxième et troisième positions p0, p1, p2. La troisième zone d'appui 15c est celle qui est située au niveau de chaque brancard latéral 11 à une position qui est la plus proche des côtés latéraux du véhicule, il s'agit de la première position p0 visible sur la figure 3. Les deuxième et troisième positions p1 et p2 relatives respectivement aux deuxième et première zones d'appui 15b, 15a sont définies par rapport à cette première position p0 de la troisième zone d'appui 15c.

La deuxième zone d'appui basse 15b est située à la deuxième position p1 qui est localisée à une première distance d1 de la première position p0 et qui est comprise entre environ 10 et 20 mm, et est de préférence de 15 mm.

La première zone d'appui haute 15a est quant à elle située à la troisième position p2 qui est localisée à une deuxième distance d2 de la première position p0 et qui est comprise entre environ 40 et 60 mm, et est de préférence de 55 mm.

Ainsi, la troisième position p2 de la première zone d'appui haute 15a est localisée à la deuxième distance d2 de la première position p0 qui est sensiblement supérieure à la première distance d1 définie entre la deuxième position p1 de la deuxième zone d'appui basse 15b et la première position p0.

Dans ce mode de réalisation, la structure de caisse de chaque véhicule de la gamme est ainsi apte à être assemblée avec des pavillons de types différents qui sont pourvus de zones de fixation pouvant avoir des formes diverses et variées. La structure de caisse en comprenant pour chaque brancard latéral 11 trois zones d'appui 15a, 15b, 15c, présente alors une compatibilité avec un grand nombre de pavillons 21a, 21b, 21c en étant apte à les supporter et à réaliser une liaison mécanique avec leur zone de fixation. Ainsi, il n'est plus nécessaire de modifier la structure de caisse par exemple par l'ajout d'une pièce supplémentaire comme cela est fait dans l'état de l'art pour lui conférer une telle compatibilité.
On notera que lorsque le pavillon 21a, 21b, 21c est assemblé à la structure de caisse, différentes configurations de fixation de ce pavillon sur cette structure de caisse peuvent être mises en oeuvre selon le type de pavillon 21a, 21b, 21c à partir d'une seule zone d'appui 15a, 15b, 15c ou de combinaisons de ces trois zones d'appui 15a, 15b, 15c de la structure de caisse.

La présente invention n'est pas limitée au mode de réalisation qui a été explicitement décrit, mais elle en inclut les diverses variantes et généralisations contenues dans le domaine des revendications ci-après.

## Revendications

1. Gamme d'au moins deux types de véhicule automobile, dont un premier type de véhicule comprend un pavillon en tôle (21a, 21b) et un second type comprend un pavillon en verre (21c), ces véhicules comprenant chacun une structure de caisse pourvue de brancards latéraux (11) constitués d'une paroi extérieure (12) tournée vers l'extérieur du véhicule et d'une paroi intérieure (13) formant une doublure intérieure, tournée vers l'intérieur du véhicule, **caractérisée en ce que** les brancards latéraux (11) sont identiques pour les deux types de véhicules automobile, et forment sélectivement une deuxième zone d'appui basse (15b) pour un bord (24) latéral longitudinal du pavillon en tôle (21b) du véhicule du premier type ou une première zone d'appui haute (15a) pour une face inférieure (27) du pavillon en verre (21c) du véhicule du second type.

2. Gamme d'au moins deux types de véhicule automobile selon la revendication précédente, **caractérisée en ce que** la deuxième zone d'appui basse (15b) est conformée sur un bord longitudinal d'une face supérieure (25) de la paroi extérieure (12) de chaque brancard latéral (11) tandis que la première zone d'appui haute (15a) est conformée sur un bord longitudinal d'une face supérieure (26) de la paroi intérieure (13) formant la doublure intérieure.

3. Gamme d'au moins deux types de véhicule automobile selon l'une quelconque des revendications précédentes, **caractérisée en ce que** les parois extérieure et intérieure (12, 13) définissent une gouttière comprenant un fond formé par la deuxième zone d'appui basse (15b) et un bord relevé vers l'intérieur du véhicule constitué par une deuxième partie (16b) de la paroi extérieure (12) comprenant la première zone d'appui haute (15a).

4. Gamme d'au moins deux types de véhicule automobile selon l'une quelconque des revendications précédentes, **caractérisée en ce que** les première et deuxième zones d'appui (15a, 15b) sont comprises dans des premier et deuxième plans (P1, P2) sensiblement horizontaux.

5. Gamme d'au moins deux types de véhicule automobile selon l'une quelconque des revendications précédentes, **caractérisée en ce que** la première zone d'appui haute (15a) est située à une deuxième hauteur (h1) qui est sensiblement supérieure à une première hauteur (h0) de la deuxième zone d'appui basse (15b).

6. Gamme d'au moins deux types de véhicule automobile selon l'une quelconque des revendications précédentes, **caractérisée en ce que** la première zone d'appui haute (15a) et la deuxième zone d'appui basse (15b) sont agencées transversalement dans chaque brancard latéral (11) respectivement à des troisième et deuxième positions (p2, p1).

7. Gamme d'au moins deux types de véhicule automobile selon la revendication précédente, **caractérisée en ce que** la troisième position (p2) de la première zone d'appui haute (15a) est localisée à une deuxième distance (d2) d'une première position (p0), la deuxième distance (d2) étant sensiblement supérieure à une première distance (d1) définie entre la deuxième position (p1) de la deuxième zone d'appui basse (15b) et la première position (p0).

8. Gamme d'au moins deux types de véhicule automobile selon l'une quelconque des revendications précédentes, **caractérisée en ce que** la première zone d'appui haute (15a) est reliée mécaniquement à la face inférieure (27) du pavillon en verre (21c) à partir d'un élément de liaison (17a) comme notamment de la colle.

9. Gamme d'au moins deux types de véhicule automobile selon l'une quelconque des revendications précédentes, **caractérisée en ce que** la deuxième zone d'appui basse (15b) est reliée mécaniquement au bord (24) latéral longitudinal du pavillon en tôle (21b) à partir d'un élément de liaison (17b) comme notamment une soudure par point.

10. Gamme d'au moins deux types de véhicule automobile selon l'une quelconque des revendications précédentes, **caractérisée** en chaque brancard latéral (11) forme une troisième zone d'appui (15c) pour un bord (28) latéral longitudinal du pavillon en tôle (21a).

## Patentansprüche

1. Palette von wenigstens zwei Arten von Kraftfahrzeugen, von denen eine erste Fahrzeugart ein Blechdach (21a, 21b) umfasst und eine zweite Art ein Glasdach (21c) umfasst, wobei diese Fahrzeuge jeweils eine Karosseriestruktur umfassen, die mit seitlichen Längsträgern (11) versehen ist, die aus einer äußeren Wand (12), die der Außenseite des Fahrzeugs zugewandt ist, und einer eine Innenverkleidung bildenden inneren Wand (13), die dem Inneren des Fahrzeugs zugewandt ist, bestehen, **dadurch gekennzeichnet, dass**
die seitlichen Längsträger (11) für die zwei Arten von Kraftfahrzeugen identisch sind und selektiv einen zweiten, niedrigen Abstützungsbereich (15b) für einen seitlichen Längsrand (24) des Blechdaches (21b) des Fahrzeugs der ersten Art oder einen ersten, hohen Abstützungsbereich (15a) für eine Unterseite (27) des Glasdaches (21c) des Fahrzeugs der zweiten Art bilden.

2. Palette von wenigstens zwei Arten von Kraftfahrzeugen nach dem vorhergehenden Anspruch, **dadurch gekennzeichnet, dass** der zweite, niedrige Abstützungsbereich (15b) auf einem Längsrand einer Oberseite (25) der äußeren Wand (12) jedes seitlichen Längsträgers (11) ausgebildet ist, während der erste, hohe Abstützungsbereich (15a) auf einem Längsrand einer Oberseite (26) der die Innenverkleidung bildenden inneren Wand (13) ausgebildet ist.

3. Palette von wenigstens zwei Arten von Kraftfahrzeugen nach einem der vorhergehenden Ansprüche, **dadurch gekennzeichnet, dass** die äußere und die innere Wand (12, 13) eine Rinne definieren, die einen von dem zweiten, niedrigen Abstützungsbereich (15b) gebildeten Boden und einen zum Inneren des Fahrzeugs hin hochstehenden Rand umfasst, der aus einem zweiten Teil (16b) der äußeren Wand (12) besteht, der den ersten, hohen Abstützungsbereich (15a) umfasst.

4. Palette von wenigstens zwei Arten von Kraftfahrzeugen nach einem der vorhergehenden Ansprüche, **dadurch gekennzeichnet, dass** der erste und der zweite Abstützungsbereich (15a, 15b) in einer ersten und einer zweiten Ebene (P1, P2) liegen, die im Wesentlichen horizontal sind.

5. Palette von wenigstens zwei Arten von Kraftfahrzeugen nach einem der vorhergehenden Ansprüche, **dadurch gekennzeichnet, dass** sich der erste, hohe Abstützungsbereich (15a) auf einer zweiten Höhe (h1) befindet, welche deutlich höher als eine erste Höhe (h0) des zweiten, niedrigen Abstützungsbereichs (15b) ist.

6. Palette von wenigstens zwei Arten von Kraftfahrzeugen nach einem der vorhergehenden Ansprüche, **dadurch gekennzeichnet, dass** der erste, hohe Abstützungsbereich (15a) und der zweite, niedrige Abstützungsbereich (15b) in jedem seitlichen Längsträger (11) quer an einer dritten bzw. zweiten Position (p2, p1) angeordnet sind.

7. Palette von wenigstens zwei Arten von Kraftfahrzeugen nach dem vorhergehenden Anspruch, **dadurch gekennzeichnet, dass** sich die dritte Position (p2) des ersten, hohen Abstützungsbereichs (15a) in einem zweiten Abstand (d2) von einer ersten Position (p0) befindet, wobei der zweite Abstand (d2) deutlich größer als ein erster Abstand (d1) ist, der zwischen der zweiten Position (p1) des zweiten, niedrigen Abstützungsbereichs (15b) und der ersten Position (p0) definiert ist.

8. Palette von wenigstens zwei Arten von Kraftfahrzeugen nach einem der vorhergehenden Ansprüche, **dadurch gekennzeichnet, dass** der erste, hohe Abstützungsbereich (15a) mittels eines Verbindungselements (17a), wie insbesondere Klebstoff, mit der Unterseite (27) des Glasdaches (21c) mechanisch verbunden ist.

9. Palette von wenigstens zwei Arten von Kraftfahrzeugen nach einem der vorhergehenden Ansprüche, **dadurch gekennzeichnet, dass** der zweite, niedrige Abstützungsbereich (15b) mittels eines Verbindungselements (17b), wie insbesondere einer Punktschweißung, mit dem seitlichen Längsrand (24) des Blechdaches (21b) mechanisch verbunden ist.

10. Palette von wenigstens zwei Arten von Kraftfahrzeugen nach einem der vorhergehenden Ansprüche, **dadurch gekennzeichnet, dass** jeder seitliche Längsträger (11) einen dritten Abstützungsbereich (15c) für einen seitlichen Längsrand (28) des Blechdaches (21a) bildet.

## Claims

1. Range of at least two types of motor vehicle, of which a first vehicle type comprises a sheet metal roof (21a, 21b) and a second type comprises a glass roof (21c), these vehicles each comprising a body shell structure having side rails (11) consisting of an outer wall (12) facing the outside of the vehicle and an inner wall (13), forming an interior lining, facing the inside of the vehicle, **characterized in that** the side rails (11) are identical for both types of motor vehicle and selectively form a low second support zone (15b) for a longitudinal lateral edge (24) of the sheet metal roof (21b) of the vehicle of the first type or a high first support zone (15a) for a lower face (27) of the glass roof (21c) of the vehicle of the second type.

2. Range of at least two types of motor vehicle according to the preceding claim, **characterized in that** the low second support zone (15b) is formed on a longitudinal edge of an upper face (25) of the outer wall (12) of each side rail (11) while the high first support zone (15a) is formed on a longitudinal edge of an upper face (26) of the inner wall (13), forming the interior lining.

3. Range of at least two types of motor vehicle according to either of the preceding claims, **characterized in that** the outer and inner walls (12, 13) define a gutter comprising a bottom formed by the low second support zone (15b) and an edge turned up toward the interior of the vehicle consisting of a second part (16b) of the outer wall (12) comprising the high first support zone (15a).

4. Range of at least two types of motor vehicle according to any one of the preceding claims, **characterized in that** the first and second support zones (15a, 15b) are included in substantially horizontal first and second planes (P1, P2).

5. Range of at least two types of motor vehicle according to any one of the preceding claims, **characterized in that** the high first support zone (15a) is located at a second height (h1) that is substantially greater than a first height (h0) of the low second support zone (15b).

6. Range of at least two types of motor vehicle according to any one of the preceding claims, **characterized in that** the high first support zone (15a) and the low second support zone (15b) are arranged transversely in each side rail (11) at third and second positions (p2, p1), respectively.

7. Range of at least two types of motor vehicle according to the preceding claim, **characterized in that** the third position (p2) of the high first support zone (15a) is located at a second distance (d2) from a first position (p0), the second distance (d2) being substantially greater than a first distance (d1) defined between the second position (p1) of the low second support zone (15b) and the first position (p0).

8. Range of at least two types of motor vehicle according to any one of the preceding claims, **characterized in that** the high first support zone (15a) is mechanically connected to the lower face (27) of the glass roof (21c) by means of a linking element (17a), such as, in particular, adhesive.

9. Range of at least two types of motor vehicle according to any one of the preceding claims, **characterized in that** the low second support zone (15b) is mechanically connected to the longitudinal lateral edge (24) of the sheet metal roof (21b) by means of a linking element (17b), such as, in particular, a spot weld.

10. Range of at least two types of motor vehicle according to any one of the preceding claims, **characterized in that** each side rail (11) forms a third support zone (15c) for a longitudinal lateral edge (28) of the sheet metal roof (21a).
